Europäisches Patentamt

European Patent Office

Office européen des brevets

(11) Veröffentlichungsnummer: **0 014 750**
A1

(12) **EUROPÄISCHE PATENTANMELDUNG**

(21) Anmeldenummer: **79104756.6**

(22) Anmeldetag: **29.11.79**

(51) Int. Cl.³: **H 04 B 7/26**
**H 04 B 1/50**

(30) Priorität: **20.02.79 DE 2906438**

(43) Veröffentlichungstag der Anmeldung:
**03.09.80 Patentblatt 80/18**

(84) Benannte Vertragsstaaten:
**AT BE DE FR GB IT LU NL SE**

(71) Anmelder: **ROBERT BOSCH GMBH**
**Postfach 50**
**D-7000 Stuttgart 1(DE)**

(72) Erfinder: **Jeromin, Jens-Peter, Ing.-grad.**
**Livländische Strasse 28**
**D-1000 Berlin 31(DE)**

(72) Erfinder: **Stichel, Manfred**
**Hugo-Vogel-Strasse 7**
**D-1000 Berlin 39(DE)**

(74) Vertreter: **Schmidt, Hans-Ekhardt**
**Robert Bosch GmbH Geschäftsbereich Elektronik**
**Patent- und Lizenzabteilung Forckenbeckstrasse 9-13**
**D-1000 Berlin 33(DE)**

(54) Sprechfunksystem mit mehreren von der Betriebsart "Bedingtes Gegensprechen" auf die Betriebsart "Wechselsprechen" umschaltbaren Sprechfunkgeräten.

(57) Es wird ein Sprechfunksystem vorgeschlagen, das eine Relaisstation (11) und mehrere Sprechfunkgeräte (10, 12) umfaßt. Die Sprechfunkgeräte (10, 12) sind auf die Betriebsart "Bedingtes Gegensprechen" oder "Wechselsprechen" umschaltbar. Nur in der Betriebsart "Bedingtes Gegensprechen" findet der Funkverkehr über die Relaisstation (11) statt. Eine in den Sprechfunkgeräten (10, 12) enthaltene Rufsignalschaltung sorgt dafür, daß automatisch ein Rufsignal bestimmter Frequenz (fR) und bestimmter kurzer Dauer ausgesendet wird, wenn die Sendetaste (16) des Sprechfunkgerätes (10) betätigt wird, wenn das Gerät auf die Betriebsart "Bedingtes Gegensprechen" geschaltet ist und wenn das Sprechfunkgerät keinen Hochfrequenzträger empfängt.

EP 0 014 750 A1

5/79
EK/PLI Scht/Li
19. Febr. 1979


ROBERT BOSCH GMBH, 7000 Stuttgart


Sprechfunksystem mit mehreren von der Betriebsart
"Bedingtes Gegensprechen" auf die Betriebsart
"Wechselsprechen" umschaltbaren Sprechfunkgeräten


Stand der Technik


Die Erfindung geht aus von einem Sprechfunksystem nach der
Gattung des Hauptanspruchs.

Es ist schon ein Sprechfunksystem bekannt (F. W. Rosemeier,
Handbuch über den UKW-Sprechfunk bei Sicherheitsdiensten,
Carl Heymanns Verlag KG, Köln, 1971, Seiten 35 bis 42), bei
dem der Funkverkehr zwischen zwei weit voneinander entfernten Sprechfunkgeräten über eine Relaisstation stattfindet.
Die Relaisstation empfängt die von dem ersten Sprechfunkgerät ausgesendeten modulierten Hochfrequenzsignale und
sendet sie nach einer Verstärkung wieder aus, damit das
zweite Sprechfunkgerät die Signale empfangen kann. Hierfür
muß eine Duplexfrequenz zur Verfügung stehen, weil die
Relaisstation beispielsweise mit der Unterbandfrequenz
empfängt und mit der Oberbandfrequenz sendet. Die vorzugsweisen mobilen Sprechfunkgeräte arbeiten in der umgekehrten
Bandlage und sind von einem Typ, der wahlweise von der

- 2 -

0014750

Betriebsart "Bedingtes Gegensprechen" auf die Betriebsart "Wechselsprechen" umgeschaltet werden kann. Während die Betriebsart "Bedingtes Gegensprechen" dem Funkverkehr über die Relaisstation vorbehalten ist, wird die Betriebsart "Wechselsprechen" nur für den Funkverkehr ohne Relaisstation verwendet.

Soll von einem Sprechfunkgerät aus ein über die Relaisstation zu führendes Gespräch eingeleitet werden, so muß zunächst eine besondere Ruftaste des Sprechfunkgerätes betätigt werden, wodurch ein Rufsignal ausgesendet wird. Wird das Rufsignal von der Relaisstation empfangen und als richtig erkannt, dann wird die Sender-Endstufe der Relaisstation hochgetastet. Nunmehr kann von dem rufenden Sprechfunkgerät über die Relaisstation eine Gesprächsverbindung zu einem anderen Sprechfunkgerät hergestellt werden. Am Gesprächsende wird mit einer gewissen Zeitverzögerung der Sender der Relaisstation wieder abgeschaltet, so daß die Relaisstation für den Empfang eines neuen Rufsignals bereit ist.

## Vorteile der Erfindung

Das erfindungsgemäße Sprechfunkgerät mit den kennzeichnenden Merkmalen des Hauptanspruchs hat den Vorteil, daß die Funkteilnehmer keine besondere Ruftaste betätigen müssen, um der Relaisstation einen Gesprächswunsch mitzuteilen.

Durch die in den Unteransprüchen aufgeführten Maßnahmen sind vorteilhafte Weiterbildungen und Verbesserungen des im Hauptanspruch angegebenen Sprechfunksystems möglich. Besonders vorteilhaft ist es, wenn das Rufsignal ein aus einer Tonfrequenz bestehendes Signal ist, dessen Erzeugung in dem Sprechfunkgerät keine Schwierigkeiten bereitet und das nur eine kurze Dauer von zum Beispiel 300 ms ausgesendet zu werden braucht, um in der Relaisstation sicher erkannt zu werden.

0014750

## Zeichnung

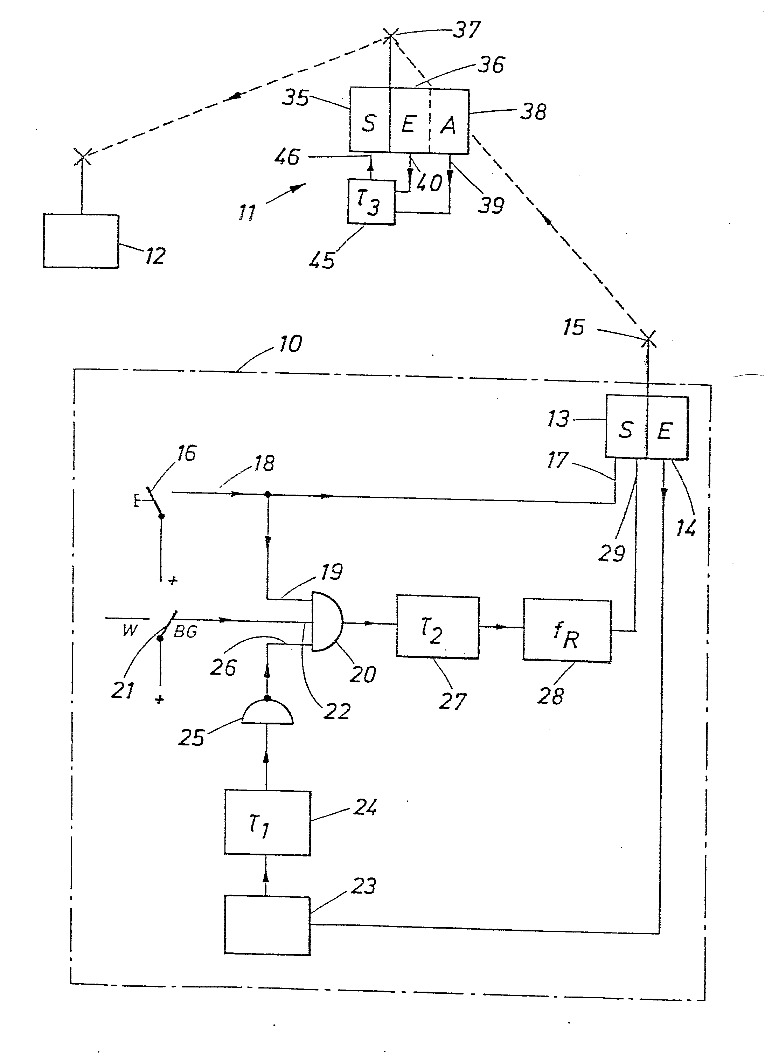

Ein Ausführungsbeispiel der Erfindung ist in der Zeichnung an Hand eines stark vereinfachten Blockschaltbildes des Sprechfunksystems dargestellt und in der nachfolgenden Beschreibung erläutert.

## Beschreibung der Erfindung

In dem Blockschaltbild bezeichnet der durch strichpunktierte Linien umrahmte Schaltungsteil ein erstes Sprechfunkgerät 10 von mehreren zu einer Relaisstation 11 gehörenden Sprechfunkgeräten, von denen der Übersichtlichkeit halber lediglich noch ein zweites Sprechfunkgerät 12 angedeutet ist. Das erste Sprechfunkgerät 10 hat einen Sendeteil 13 und einen Empfangsteil 14 sowie eine Sende- und Empfangsantenne 15. Zu dem Sendeteil gehört eine Sendetaste 16, die in ihrer Arbeitsstellung an eine mit einem ersten Eingang 17 des Sendeteils 13 verbundene Leitung 18 ein positives Potential legt, das zum Hochtasten einer Sender-Endstufe des im Ruhezustand auf Empfang geschalteten Sprechfunkgerätes 10 dient.

Die Leitung 18 ist außerdem mit einem ersten Eingang 19 einer UND-Schaltung 20 verbunden. Zu dem ersten Sprechfunkgerät gehört ein durch einen Kanalschalter des Sprechfunkgerätes gesteuerter weiterer Umschalter 21, der sich, sofern das Gerät auf einen Kanal geschaltet ist, auf dem der Funkverkehr in der Betriebsart "Wechselsprechen" stattfindet, in der Stellung W befindet und der sich, sofern das Gerät auf einen Kanal geschaltet ist, auf dem der Funkverkehr in der Betriebsart "Bedingtes Gegensprechen" stattfindet, die Stellung BG einnimmt. In der Stellung BG des weiteren Umschalters 21 wird an einen zweiten Eingang 22 der UND-Schaltung 20 ebenfalls ein positives Potential gelegt.

Der Empfangsteil 14 des ersten Sprechfunkgerätes 10 weist
eine Squelch-Schaltung 23 auf, deren Ausgang über einen
ersten Zeitkreis 24 und eine Inverter-Stufe 25 mit einem
dritten Eingang 26 der UND-Schaltung 20 in Verbindung
steht. An den Ausgang der UND-Schaltung schließt sich ein
zweiter Zeitkreis 27 und an diesen ein Tonfrequenzgenerator 28 an, dessen Ausgang mit einem zweiten Eingang 29 des
Sendeteils 13 verbunden ist.

Die Relaisstation 11 umfaßt einen Sendeteil 35 und einen
Empfangsteil 36 sowie eine Sende- und Empfangsantenne 37.
Zu dem Empfangsteil 36 gehört ein Rufsignal-Auswerter 38,
der einen Ausgang 39 hat. Dieser Ausgang ist mit einem ersten
Eingang und ein Ausgang 40 des Empfangsteils 36 mit einem
zweiten Eingang eines dritten Zeitkreises 45 verbunden, dessen
Ausgang mit einem Eingang 46 des Sendeteils 35 der Relaisstation in Verbindung steht.

Das zweite Sprechfunkgerät 12 hat den gleichen Aufbau wie das
erste Sprechfunkgerät 10.

Das in der Zeichnung schematisch dargestellte Sprechfunksystem
hat folgende Wirkungsweise.

Will der Benutzer des ersten Sprechfunkgerätes 10 ein Gespräch
mit dem Benutzer des zweiten Sprechfunkgerätes 12 über die
Relaisstation 11 führen, weil ein direkter Funkverkehr wegen
der großen Entfernung zwischen den beiden Sprechfunkgeräten
nicht möglich ist, so schaltet er zunächst seinen Kanalschalter
auf einen Funkkanal, der für die Betriebsart "Bedingtes Gegensprechen" vorgesehen ist. Bei dieser Betriebsart befindet sich
der weitere Umschalter 21 in der aus der Zeichnung ersichtlichen Schalterstellung. Die Betriebsart "Bedingtes Gegensprechen
ist ausschließlich dem Funkverkehr über die Relaisstation 11 vorbehalten.

Betätigt der Benutzer des ersten Sprechfunkgerätes nunmehr seine Sendetaste 16, so wird automatisch ein Tonruf zu der Relaisstation 11 gesendet, sofern der gewählte Funkkanal frei ist. Das Freisein des Funkkanals wird dadurch festgestellt, daß die zu dem Empfangsteil 14 gehörende Squelch-Schaltung 23 das bei Nichtempfang eines Hochfrequenzträgers vorhandene Rauschen auswertet und eine Spannung mit einem bestimmten, zum Beispiel bei Null Volt liegenden, Spannungswert abgibt. Dadurch wird der erste Zeitkreis 24 nicht beeinflußt, und die Inverter-Stufe 25 gibt an den dritten Eingang 26 der UND-Schaltung 20 eine Spannung mit einem bestimmten, zum Beispiel positiven, Spannungswert ab. Somit weisen alle drei Eingänge der UND-Schaltung 20 eine bestimmte positive Spannung auf, wodurch der Ausgang der UND-Schaltung ebenfalls eine positive Spannung abgibt. Dadurch wird der zweite Zeitkreis 27 angesteuert, der den Tonfrequenzgenerator 28 einschaltet. Der Tonfrequenzgenerator erzeugt ein Tonfrequenzsignal mit der Frequenz $f_R$ für eine kurze Dauer, die von der Zeitkonstante $\tau_2$ von zum Beispiel 300 ms abhängt. Das tonfrequente Rufsignal wird dem zweiten Eingang 29, das ist ein Modulationseingang des Sendeteils 13, zugeführt und als Modulation eines Hochfrequenzträgers über die Sende- und Empfangsantenne 15 abgestrahlt.

In der Relaisstation 11 wird das Rufsignal empfangen und im Anschluß an eine Demodulation in dem Rufsignal-Auswerter 38 ausgewertet. Hat der Rufsignal-Auswerter das Rufsignal als richtig erkannt, dann gibt er an seinem Ausgang 39 eine bestimmte, zum Beispiel positive, Signalspannung ab. Liegt diese Signalspannung vor und zusätzlich an dem Ausgang 40 eine  von der Squelch-Schaltung der Relaisstation abgeleitete Signalspannung, dann wird der Sendeteil der Relaisstation hochgetastet.

Hat der zweite Zeitkreis 27 nach 300 ms den Tonfrequenzgenerator 28 wieder abgeschaltet und ist damit die Tonrufzeit beendet, so kann das Gespräch mit dem Benutzer des
zweiten Sprechfunkgerätes 12 begonnen werden. Der Benutzer
des ersten Sprechfunkgerätes 10 gibt das Gespräch für den
Gesprächspartner jeweils frei, indem er seine Sendetaste
losläßt. Dadurch wird das erste Sprechfunkgerät auf Empfang
geschaltet und die Sendetaste 16 in die aus der Zeichnung
ersichtliche Lage übergeführt. Damit nun bei jedem erneuten
Betätigen der Sendetaste nicht wieder ein Tonruf ausgesendet
wird, der die Funkteilnehmer stören könnte, hat der erste
Zeitkreis 24 eine Zeitkonstante $\tau_1$, die beispielsweise 7 s
beträgt. Solange der Gesprächspartner spricht, sendet die
Relaisstation 11 einen Hochfrequenzträger aus, den die
Squelch-Schaltung 23 des ersten Sprechfunkgerätes auswertet.
Die Squelch-Schaltung gibt in diesem Fall eine Spannung mit
einem bestimmten, zum Beispiel positiven, Spannungswert ab,
so daß der erste Zeitkreis 24 gesetzt wird. Der erste Zeitkreis gibt dann an seinem Ausgang eine zum Beispiel positive
Spannung ab, die nach Invertierung durch die Inverter-Stufe 25
die UND-Schaltung 20 zur Abgabe einer, zum Beispiel bei
Null Volt liegenden, Spannung veranlaßt, die den zweiten Zeitkreis 27 nicht beeinflußt. Jedes Betätigen der Sendetaste des
ersten Sprechfunkgerätes innerhalb von 7 s nach dem Umschalten
des zweiten Sprechfunkgerätes auf Empfang bewirkt somit keine
neue Tonrufgabe.

Der Zeitkreis 45 der Relaisstation 11 hat eine Zeitkonstante $\tau_3$
von zum Beispiel 7 s, die Pausen in der Aussendung des Hochfrequenzträgers durch die Sprechfunkgeräte überbrückt, sofern
die Pausen kleiner als 7 s sind.

`0014750`

Ist das erste Sprechfunkgerät 10 auf einen Kanal geschaltet, der für die Betriebsart "Wechselsprechen" vorgesehen ist, dann bewirkt eine Betätigung der Sendetaste trotz freien Kanals kein Aussenden eines Tonrufs, weil an dem zweiten Eingang 22 der UND-Schaltung 20 keine positive Spannung mehr liegt.

00 14750

5/79
EK/PLI Scht/Li
19. Febr. 1979


ROBERT BOSCH GMBH, 7000 Stuttgart

Ansprüche

1. Sprechfunksystem mit mehreren von der Betriebsart
   "Bedingtes Gegensprechen" auf die Betriebsart
   "Wechselsprechen" umschaltbaren Sprechfunkgeräten,
   von denen jeweils zwei Sprechfunkgeräte entweder
   in der Betriebsart "Bedingtes Gegensprechen" über
   eine allen Sprechfunkgeräten zugeordnete Relaisstation in Gesprächsverbindung treten können, sofern
   der Gesprächswunsch durch Aussenden eines beim Betätigen einer Taste eines der beiden Sprechfunkgeräte
   erzeugten Signals an die Relaisstation gemeldet und
   die Relaisstation durch das empfangene Signal in den
   Betriebszustand geschaltet wird oder in der Betriebsart "Wechselsprechen" ohne Einschaltung der Relaisstation, dadurch gekennzeichnet, daß eine in den
   Sprechfunkgeräten (10, 12) enthaltene Rufsignalschaltung automatisch ein Rufsignal bestimmter kurzer Dauer
   abgibt, wenn erstens die Sendetaste betätigt ist,
   zweitens das Sprechfunkgerät auf die Betriebsart
   "Bedingtes Gegensprechen" geschaltet ist und wenn
   drittens das Sprechfunkgerät keinen Hochfrequenzträger
   empfängt.

2. Sprechfunksystem nach Anspruch 1, dadurch gekennzeichnet,
   daß das Rufsignal ein aus einer Tonfrequenz ($f_R$) bestehendes Signal ist.

5/79                          - 2 -

3. Sprechfunksystem nach Anspruch 1, dadurch gekennzeichnet, daß die Rufsignalschaltung eine UND-Schaltung (20) mit drei Eingängen (19, 22, 26) und einem Ausgang enthält, von denen der erste Eingang (19) mit der Sendetaste (16) des Sprechfunkgerätes (10), der zweite Eingang (22) mit einem Umschalter (21) des Kanalschalters des Sprechfunkgerätes und der dritte Eingang (26) über eine Inverter-Stufe (25) und einen ersten Zeitkreis (24) mit einer Squelch-Schaltung (23) des Sprechfunkgerätes verbunden ist, und daß der Ausgang der UND-Schaltung über einen zweiten Zeitkreis (27) mit einem Tonfrequenzgenerator (28) verbunden ist.

4. Sprechfunksystem nach Anspruch 1 oder 3, dadurch gekennzeichnet, daß der erste Zeitkreis (24) eine Zeitkonstante ($\tau_1$) von etwa 7 s hat.

5. Sprechfunksystem nach Anspruch 1 oder 3, dadurch gekennzeichnet, daß der zweite Zeitkreis (27) eine Zeitkonstante ($\tau_2$) von etwa 300 ms hat.

6. Sprechfunksystem nach Anspruch 1, dadurch gekennzeichnet, daß die mit einem Rufsignal-Auswerter (38) ausgerüstete Relaisstation (11) einen dritten Zeitkreis (45) enthält, der erstens mit einem Ausgang (39) des Rufsignal-Auswerters (38) und zweitens mit einem Ausgang (40) des Empfangsteils (36) verbunden ist und dessen Ausgang mit einem Eingang (46) des Sendeteils (35) der Relaisstation (11) verbunden ist.

7. Sprechfunksystem nach Anspruch 6, dadurch gekennzeichnet, daß der dritte Zeitkreis (45) eine Zeitkonstante ($\tau_3$) von ca. 7 s hat.

| Kategorie | Kennzeichnung des Dokuments mit Angabe, soweit erforderlich, der maßgeblichen Teile | betrifft Anspruch |
|---|---|---|
| | DE - A1 - 2 432 449 (ROBERT BOSCH) | 1,2 |
| | + Seite 1, Zeile 7 bis Seite 2, Zeile 2; Seite 2, Zeile 10 bis Seite 3, Zeile 6 + | |
| | -- | |
| A | US - A - 3 745 462 (TRIMBLE) | 1,2 |
| | + Spalte 9; Zeilen 16-46 + | |
| | -- | |
| A | DE - A1 - 2 556 423 (ROBERT BOSCH) | |
| | + Seite 6; Zeile 13 bis Seite 7, Zeile 14 + | |
| | -- | |
| A | DE - C1 - 2 340 136 (SIEMENS) | |
| | + Spalte 3, Zeilen 56-66; Fig. 1 + | |
| | ---- | |

**EINSCHLÄGIGE DOKUMENTE**

**KLASSIFIKATION DER ANMELDUNG (Int.Cl.) 3**

H 04 B 7/26
H 04 B 1/50

**RECHERCHIERTE SACHGEBIETE (Int. Cl.) 3**

H 04 B 1/00
H 04 B 7/00
H 04 Q 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 16-04-1980 | DRÖSCHER |

EPA form 1503.1   06.78